# EUROPEAN PATENT APPLICATION

(11) **EP 2 706 214 A1**
(43) Date of publication of application: **12.03.2014**
(21) Application number: 12183494.9
(22) Date of filing: 07.09.2012
(51) Int. Cl.: F02D 19/02, F02D 19/06, F02D 19/10, F02M 21/02

(54) **Gas valve operation in dual fuel internal combustion engine**

(71) Applicant: Caterpillar Motoren GmbH & Co. KG, 24159 Kiel (DE)
(72) Inventor: Tuexen, Thorsten, 24161 Altenholz (DE); Bleyer, Benjamin, 24159 Kiel (DE)
(74) Representative: Kramer - Barske - Schmidtchen

(57) **Abstract**

The present disclosure generally relates to a gaseous fuel admission valve (44) of dual fuel internal combustion engines (1), for dosing gaseous fuel from a gaseous fuel system (30) into charge air from a charge air system (14). Said gaseous fuel admission valve (44) is susceptible to increased wear and particle ingress in liquid fuel mode due to dithering and charge air passing the gaseous fuel admission valve (44). Therefore, a pressurising gas system (48) applies a pressure upstream of the at least one gaseous fuel admission valve (44) greater than or equal to a pressure downstream of the at least one gaseous fuel admission valve (44).

## Description

### Technical Field

The present disclosure generally relates to gaseous fuel admission valves, and more particularly, to a method and apparatus for reducing wear and leakage of gaseous fuel admission valves of a dual fuel internal combustion engine.

### Background

A dual fuel internal combustion engine can typically operate in a liquid fuel mode (LFM) and in a gaseous fuel mode (GFM). In LFM, a liquid fuel, such as diesel fuel, is injected directly into an engine cylinder or a precombustion chamber as the sole source of energy during combustion. In GFM, a gaseous fuel such as natural gas is mixed with air in an intake port of a cylinder and a small amount of liquid fuel is injected into the cylinder or the precombustion chamber in order to ignite the mixture of air and gaseous fuel. In such dual fuel internal combustion engines, one or more of such gaseous fuel admission valves are positioned between a source of gaseous fuel and an air intake of the engine. When a gaseous fuel admission valve is opened in GFM, the gaseous fuel passes into the air intake for mixing with the air. Such gaseous fuel admission valves may also be utilized in spark-ignited engines.

A solenoid actuated gaseous fuel admission valve such as that described in European Patent 1 040 264 B1 can be used to mix gaseous fuel with air in gaseous fuel mode. The nature of solenoid actuated gaseous fuel admission valves is such that current delivered to a solenoid coil thereof actuates the valve.

Said gaseous fuel admission valves may be susceptible to leakage and increased wear. For example, typically a solenoid operated valve includes a movable plate and stationary plate or disc. During operation in LFM, the movable plate may dither on the stationary plate or disc of the closed gaseous fuel admission valve. Thereby, both movable plate and stationary plate or disc may be exposed to an increased wear.

Furthermore, if even small particulates get trapped between the movable plate and the stationary plate or seat, both may be positioned far enough apart and, thereby, may cause leakages through a closed gaseous fuel admission valve.

Accordingly, the present invention is directed to overcoming one or more of the problems as set forth above.

### Summary of the Disclosure

According to an aspect of the present disclosure, a method for operating a dual fuel internal combustion engine configured to operate in a liquid fuel mode and in a gaseous fuel mode using at least one gaseous fuel admission valve for dosing gaseous fuel into charge air may comprise, operating the dual fuel internal combustion engine in the liquid fuel mode, and simultaneously applying a pressure upstream of the at least one gaseous fuel admission valve greater than or equal to a pressure downstream of the at least one gaseous fuel admission valve.

According to another aspect of the present disclosure, a pressurising gas system configured to be used at a dual fuel internal combustion engine configured to operate in a liquid fuel mode and in a gaseous fuel mode using at least one gaseous fuel admission valve for dosing gaseous fuel from a gaseous fuel system into charge air, may comprise a gaseous fuel pipe. The gaseous fuel pipe may be configured to fluidly interconnect the gaseous fuel system with the at least one gaseous fuel admission valve. The gaseous fuel pipe may comprise a gas intake that may be configured to receive pressurised gas. The pressurising gas system may further comprise a gas inlet valve that may be fluidly connected to the gaseous fuel pipe via the gas intake. The pressurising gas system may further comprise a control unit connected to the gas inlet valve. The control unit may be configured to open the gas inlet valve in liquid fuel mode to enable pressurised gas entering the gaseous fuel pipe to apply a pressure upstream of the at least one gaseous fuel admission valve greater than or equal to a pressure downstream of the at least one gaseous fuel admission valve.

Other features and aspects of this disclosure will be apparent from the following description and the accompanying drawings.

### Brief Description of the Drawings

Fig. 1 shows an exemplary schematic drawing of a dual fuel internal combustion engine with a pressurising gas unit;
Fig. 2 shows another exemplary schematic drawing of a dual fuel internal combustion engine with a pressurising gas unit; and
Fig. 3 shows yet another exemplary schematic drawing of a dual fuel internal combustion engine with a pressurising gas unit;

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that gaseous fuel admission valves of a dual fuel internal combustion engine may be exposed to increased wear, leakage and particle ingress during normal operation.

Specifically, particle ingress may result from particles within charge air passing the gaseous fuel admission valve in LFM. Passing of charge air in LFM may be possible due to the fact that the gaseous fuel admission valve may not only open upon actuation. The gaseous fuel admission valve may also open if a pressure downstream of the gaseous fuel admission valve is greater than a pressure upstream of the gaseous fuel admission valve. For example, a gaseous fuel admission valve is attached to a cylinder head connecting a gaseous fuel pipe to an intake port within a cylinder head: A pressure in the intake port that is greater than a pressure in the gaseous fuel pipe may result in opening of the gaseous fuel admission valve. If even small particulates get trapped between the movable plate and the stationary disc or plate (valve seat), both may be positioned far enough apart causing leakages through a closed gaseous fuel admission valve.

It is noted that opening of gaseous fuel admission valves without actuation due to a pressure difference (pressure downstream of gaseous fuel admission valve minus pressure upstream of gaseous fuel admission valve), may not instantaneously happen if a pressure downstream of the gaseous fuel admission valve is greater than a pressure upstream of the gaseous fuel admission valve. Depending on the specific type of gaseous fuel admission valve, before opening, a force that pushes down the moveable plate on the stationary plate or disc of the gaseous fuel admission valve has to be exceeded by the pressure difference. For example, as is described in greater detail later on, a moveable disc may be pushed down on a stationary disc or plate by a plurality of springs. In this configuration, the pressure difference has to be great enough to exceed the force of the springs pushing down the moveable plate. Depending on quantity and type of springs, the pressure difference may be within the range of 100 mbar to 500 mbar, or even greater, for example, within the range of 0.5 bar to 2.5 bar, to open the gaseous fuel admission valve without actuation due to the pressure difference..

Further, gaseous fuel admission valves tend to dither in LFM if the pressure upstream of the gaseous fuel admission valve is not equal to a pressure downstream of the gaseous fuel admission valve. Dithering of a gaseous fuel admission valve may be characterized by continuously hitting of the moveable plate onto the stationary disc or plate. Thereby, increased wear of the contacting surfaces may occur, which may result in increased leakage, and/or shortened service life of the gaseous fuel admission valve.

Accordingly, an apparatus and method for operating the dual fuel internal combustion engine are disclosed that reduce dithering and particle ingress of gaseous fuel admission valves. Specifically, in LFM, a pressure is applied upstream of the gaseous fuel admission valve that is greater than or equal to a pressure downstream of the gaseous fuel admission valve. Accordingly, the gaseous fuel admission valve does not open in LFM without actuation due to a pressure difference as described above.

In one aspect of the disclosure, a pressurising gas system is configured to supply a pressurised gas upstream of the gaseous fuel admission valve in LFM, and, thereby, applying a pressure upstream of the at least one gaseous fuel admission valve. The applied pressure may be equal to or greater than a pressure downstream of the gaseous fuel admission valve.

In some embodiments, the pressurising gas system utilizes already existing hardware of a dual fuel internal combustion engine, for example, a charge air system, an inert gas flushing system, or an instrument air system.

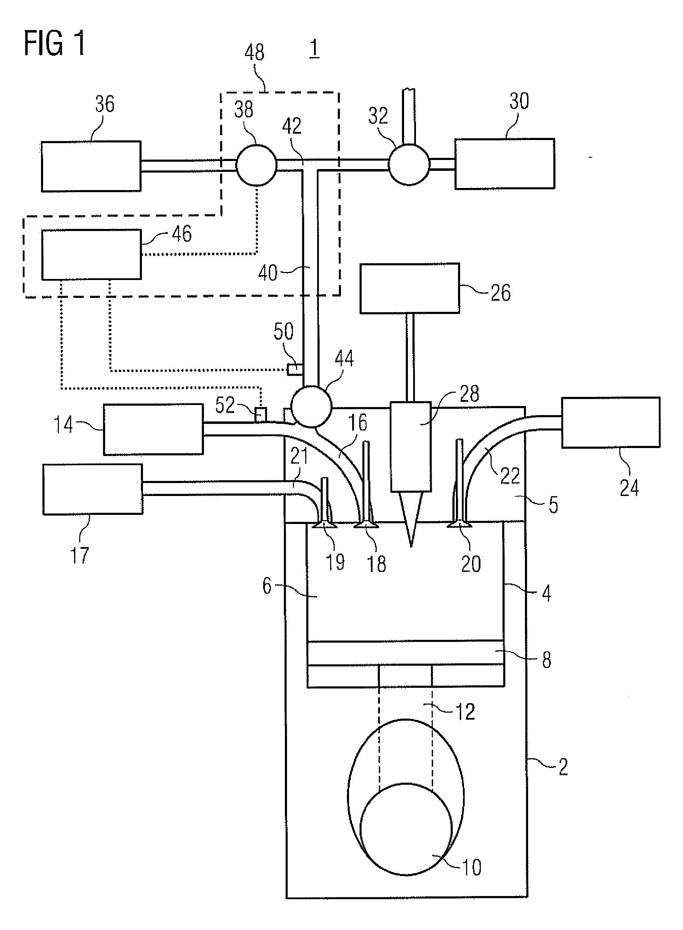

Referring to Fig. 1, an exemplary schematic diagram of a dual fuel internal combustion engine 1 including an engine unit, an air system, an exhaust system, a liquid fuel system, and a gas system is shown.

The engine unit comprises an engine block 2, at least one cylinder 4, and providing at least one combustion chamber 6 for combusting fuel, a piston 8, a crank shaft 10 drivingly coupled to the piston 8 via a piston rod 12.

In some embodiments, each cylinder 4 may be covered by a single cylinder head 5. Some embodiments may comprise one or more cylinder heads 5 covering more than one cylinder 4.

Piston 8 is configured to reciprocate within cylinder 4. The at least one cylinder 4 may be arranged, for example, in an inline V, W, or any other known configuration.

The air system comprises a charge air system 14, an intake port 16, an inlet valve 18, an instrument air system 17, and a starter valve 19.

Charge air system 14 is fluidly connected to the at least one combustion chamber 6 via intake port 16 in cylinder head 5.

Inlet valve 18 is arranged within intake port 16, and is adapted to allow or restrict flow of charge air in LFM and a mixture of compressed charge air and gaseous fuel in GFM into combustion chamber 6.

In some embodiments, each cylinder 4 may comprise two or more intake ports 16, each having an inlet valve 18.

Some embodiments may comprise at least one air intake manifold (not shown) fluidly interconnected between charge air system 14 and at least one intake port 16.

Instrument air system 17 is fluidly connected to the combustion chamber 6 via an instrument air port 21 in cylinder head 5. Instrument air system 17 comprises an air compressor for providing pressurized air.

Starter valve 19 is arranged within the instrument air port 21 in cylinder head 5, and is adapted to allow or restrict flow of instrument air into the combustion chamber 6, for example, in an initial phase of operation of the dual fuel internal combustion engine 1.

In some embodiments, instrument air system 17 may comprise an air filter.

In some embodiments, instrument air system 17 may be connected to further components of the dual fuel internal combustion engine 1. For example, instrument air system 17 may be fluidly connected to a gas valve unit 32 to control valves thereof by supplying instrument air.

The exhaust system comprises an outlet valve 20, an exhaust port 22, and an exhaust gas system 24. Exhaust gas system 24 is fluidly connected to the at least one combustion chamber 6 via exhaust port 22.

Outlet valve 20 is arranged within cylinder head 5, and is adapted to allow or restrict flow of exhaust gas from combustion chamber 6 into exhaust port 22.

In some embodiments, each cylinder 4 may comprise two or more exhaust ports 22, each having an outlet valve 20.

Some embodiments may comprise at least one exhaust manifold (not shown) fluidly interconnected between at least one exhaust port 22 and exhaust gas system 24.

In some embodiments, exhaust gas system 24 may comprise at least one of an exhaust gas recirculation system, and/or an exhaust gas aftertreatment system, for example, a particle filter, an oxidation catalyst, and/or a SCR catalyst.

In some embodiments, charge air system 14 and exhaust gas system 24 may be configured as a single-stage or two-stage turbocharged system.

The liquid fuel system includes a liquid fuel tank unit 26 and a liquid fuel injection system 28. Liquid fuel injection system 28 is fluidly connected to liquid fuel tank unit 26.

In some embodiments, liquid fuel tank unit 26 may comprise a first liquid fuel tank for storing, for example HFO, and a second liquid fuel tank for storing, for example, diesel fuel.

In some embodiments, liquid fuel injection system 28 may comprise a first injector for injecting liquid fuel in LFM, and a second liquid fuel injector for injection ignition fuel in GFM.

Other embodiments may comprise a liquid fuel injection system 28 that may comprise a combined liquid fuel injector for both liquid fuel in LFM and ignition fuel in GFM.

The gas system comprises a gaseous fuel system 30, a gas valve unit 32, an inert gas flushing system 36, a gas inlet valve 38, a gaseous fuel pipe 40, and at least one gaseous fuel admission valve 44.

Gaseous fuel system 30 comprises a gaseous fuel tank containing gaseous fuel for combustion in GFM.

Gas valve unit 32 may comprise a control valve, a shut-off valve, and a venting valve. The control valve is adapted to adjust flow of gaseous fuel. The shut-off valve is adapted to instantaneously open or restrict flow of gaseous fuel. The venting valve is fluidly connected to a gaseous fuel pipe 40, and is adapted to release left gaseous fuel within gaseous fuel pipe 40 if GFM is stopped.

Some embodiments may comprise a gas valve unit 32 having at least two redundantly arranged shut-off valves.

Inert gas flushing system 36 is fluidly connected to gaseous fuel pipe 40 via a gas intake 42. Inert gas flushing system 36 comprises an inert gas tank containing an inert gas, for example, nitrogen. The inert gas may be in a pressurised state within the inert gas tank.

In some embodiments, inert gas flushing system may comprise an inert gas compressor for compressing inert gas, for example, prior filling into the inert gas tank of the inert gas flushing system 36.

Gas inlet valve 38 is arranged within a fluid connection between inert gas flushing system 36 and gas intake 42. Gas inlet valve 38 is adapted to allow or restrict flow of inert gas from inert gas flushing system 36 into gaseous fuel pipe 40, for example, if GFM is stopped and gaseous fuel is vented off through the venting valve of gas valve unit 32.

Gaseous fuel pipe 40 fluidly connects gaseous fuel system 30 to intake port 16.

In some embodiments, a downstream section of gaseous fuel pipe 40 may be configured as a gaseous fuel manifold (not shown) that may connect an upstream section of gaseous fuel pipe 40 to intake port 16.

At least one gaseous fuel admission valve 44 is arranged at the end of gaseous fuel pipe 40. For example, each cylinder 4 may comprise one gaseous fuel admission valve 44 that may be attached to cylinder head 5, providing a fluid connection between gaseous fuel pipe 40 and intake port 16 if opened.

Gaseous fuel admission valve 44 is adapted to allow or restrict flow of gaseous fuel into intake port 16 to mix with charge air from charge air system 14. Specifically, gaseous fuel admission valve 44 is adapted to dose gaseous fuel into charge air passing intake port 16 in GFM.

It is noted that gaseous fuel admission valve 44 can only allow or restrict flow of gaseous fuel if gaseous fuel is supplied from gaseous fuel system 30 and the shut-off and control valve of gas valve unit 32 allow flow of gaseous fuel from gaseous fuel system 30 into gaseous fuel pipe 40.

In some embodiments, gaseous fuel admission valve 44 is a solenoid actuated valve in which springs hold a lower surface of a movable disk against an upper surface of a stationary disk or plate, the two surfaces being configured to provide a sealed relationship. When an actuating current is delivered to a coil of an E-core of the gaseous fuel admission valve 44, a low mass armature is pulled toward the E-core and, being attached thereto, the movable disk is similarly pulled toward the E-core. When pulled toward the E-core, the bottom surface of the movable disk moves out of its sealed relationship with respect to the top surface of the stationary disk or plate, allowing gaseous fuel to flow from gaseous fuel pipe 40 into intake port 16 if gaseous fuel is supplied in GFM. On the contrary, if the E-core is de-energised, the moveable disc is pushed toward the stationary disc or plate, thereby, providing a sealed relationship between the bottom surface of the moveable disc and the top surface of the stationary disc or plate, restricting flow of gaseous fuel from gaseous fuel system 30 into intake port 16 in GFM.

In the shown embodiment of Fig. 1, gas inlet valve 38, gas intake 42, gaseous fuel pipe 40, and a control unit 46 together form a pressurising gas system 48.

Control unit 46 is connected to gas inlet valve 38 via a control connection line (indicated by the dotted line in Fig. 1), and configured to control operation of gas inlet valve 38. For example, in GFM, control unit 46 is configured to open gas inlet valve 38 to allow inert gas from inert gas flushing system 36 to flow into gaseous fuel pipe 40 to apply a pressure upstream of at least one gaseous fuel admission valve 44.

In some embodiments, pressurising gas system 48 may further comprise a first sensor 50 connected to control unit 46 via a control connection line (indicated by the dotted line in Fig. 1). First sensor 50 may be attached to gaseous fuel pipe 40 and may be configured to sense a pressure within gaseous fuel pipe 40.

Similarly, in some embodiments, pressurising gas system 48 may further comprise a second sensor 52 connected to control unit 46 via a control connection line (indicated by the dotted line in Fig. 1). Second sensor 52 may be attached to a fluid connection between charge air system 14 and combustion chamber 6, for example, upstream of intake port 16, and may be configured to sense a pressure within said fluid connection.

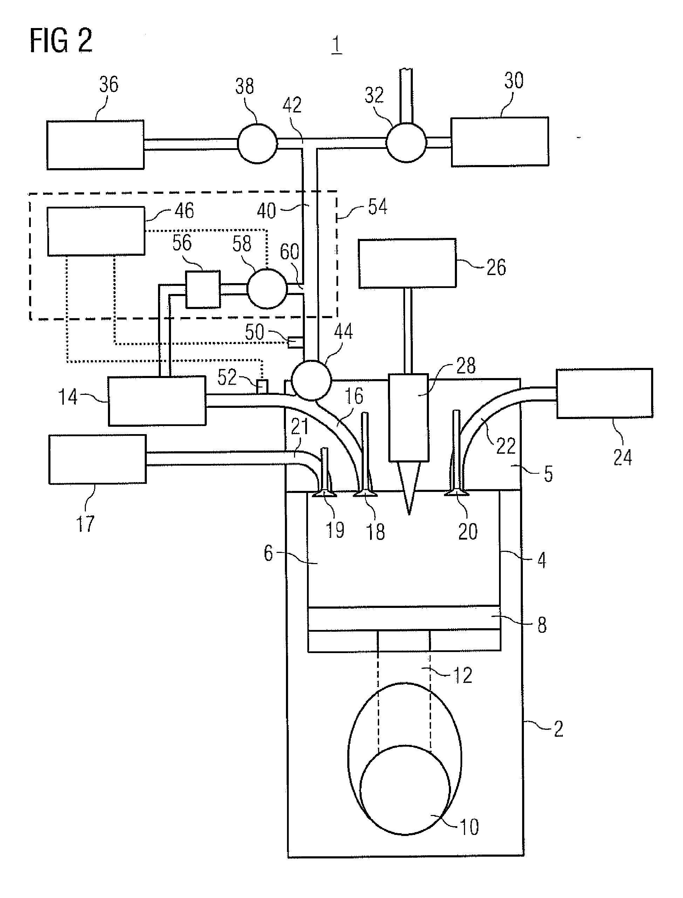

Referring to Fig. 2, an exemplary schematic diagram of a dual fuel internal combustion engine 1 that is similar to dual fuel internal combustion engine 1 of Fig. 1, except the components described in the following.

It is noted that dual fuel internal combustion engine 1 shown in Fig. 2 comprises a fluid connection between charge air system 14 and a gas intake 60 in gaseous fuel pipe 40.

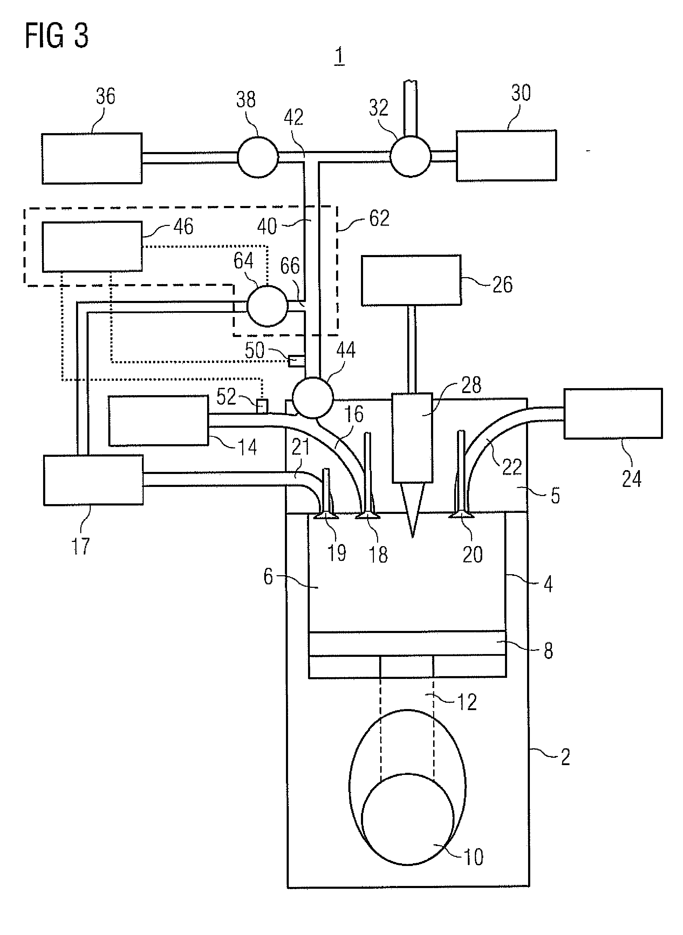

Contrary to the embodiment shown in Figs. 1 and 3, a gas inlet valve 58, gas intake 60, gaseous fuel pipe 40, and control unit 46 together form a pressurising gas system 54.

Control unit 46 is connected to gas inlet valve 58 via a control connection line (indicated by the dotted line in Fig. 2), and is configured to control operation of gas inlet valve 58. For example, in GFM, control unit 46 is configured to open gas inlet valve 58 to allow charge air from charge air system 14 to flow into gaseous fuel pipe 40 to apply a pressure upstream of at least one gaseous fuel admission valve 44.

In some embodiment, a gas filter 56 for filtering charge air may be installed in the fluid connection between charge air system 14 and gas intake 60. Gas filter 56 may separate particulates from passing charge air having a size that may negatively affect gaseous fuel admission valve 44. For example, particulates bigger than 5 µm may be separated from the charge air.

In some embodiments, pressurising gas system 54 may further comprise a first sensor 50 connected to control unit 46 via a control connection line (indicated by the dotted line in Fig. 2). First sensor 50 may be attached to gaseous fuel pipe 40 and may be configured to sense a pressure within gaseous fuel pipe 40.

Similarly, in some embodiments, pressurising gas system 54 may further comprise a second sensor 52 connected to control unit 46 via a control connection line (indicated by the dotted line in Fig. 2). Second sensor 52 may be attached to a fluid connection between charge air system 14 and combustion chamber 6, for example, upstream of intake port 16, and may be configured to sense a pressure within said fluid connection.

Turning to Fig. 3, an exemplary schematic diagram of a dual fuel internal combustion engine 1 that is similar to dual fuel internal combustion engine 1 of Fig. 1, except the components described in the following.

It is noted that dual fuel internal combustion engine 1 of Fig. 3 comprises a fluid connection between instrument air system 17 and a gas intake 66 in gaseous fuel pipe 40.

Contrary to the embodiments shown in Figs. 1 and 2, a gas inlet valve 64, gas intake 66, gaseous fuel pipe 40, and control unit 46 together form a pressurising gas system 62.

Control unit 46 is connected to gas inlet valve 64 via a control connection line (indicated by the dotted line in Fig. 3), and is configured to control operation of gas inlet valve 64. For example, in GFM, control unit 46 is configured to open gas inlet valve 64 to allow instrument air from instrument air system 17 to flow into gaseous fuel pipe 40 to apply a pressure upstream of at least one gaseous fuel admission valve 44.

In some embodiments, pressurising gas system 62 may further comprise a first sensor 50 connected to control unit 46 via a control connection line (indicated by the dotted line in Fig. 3). First sensor 50 may be attached to gaseous fuel pipe 40 and may be configured to sense a pressure within gaseous fuel pipe 40.

Similarly, in some embodiments, pressurising gas system 62 may further comprise a second sensor 52 connected to control unit 46 via a control connection line (indicated by the dotted line in Fig. 3). Second sensor 52 may be attached to a fluid connection between charge air system 14 and combustion chamber 6, for example, upstream of intake port 16, and may be configured to sense a pressure within said fluid connection.

### Industrial Applicability

In the following the operation of dual fuel internal combustion engine 1 is described in connection with Figs. 1 to 3.

Dual fuel internal combustion engine 1 may be operated with different kinds of fuels such as heavy fuel oil (HFO), diesel fuel, gasoline, and natural gas. Specifically, dual fuel internal combustion engine 1 may be operated in either a LFM, for example a diesel fuel mode, and a GFM, for example a natural gas mode.

For the LFM, charge air system 14 provides charge air to combustion chamber 6, wherein the charge air is compressed by a piston 8 moving towards a top dead center (TDC) of cylinder 4. Liquid fuel injection system 28 provides liquid fuel to compressed charge air within combustion chamber 6, where the charge air/liquid fuel mixture is ignited due to the high pressure and temperature within the combustion chamber 6.

For the GFM, a gaseous fuel such as natural gas is supplied by gaseous fuel system 30. Gas valve unit 32 allows flow of gaseous fuel into gaseous fuel pipe 40. Gaseous fuel admission valve 44 doses gaseous fuel into charge air supplied by charge air system 14 and passing intake port 16, thereby, producing a charge air gaseous fuel mixture. The charge air gaseous fuel mixture enters combustion chamber 6 through opened inlet valve 18, is compressed by piston 8 moving towards TDC of cylinder 4, and ignited by a small amount of ignition fuel, for example, diesel fuel, that is injected into combustion chamber 6 by liquid fuel injection system 28. Due to the high pressure and temperature within combustion chamber 6, the ignition fuel instantaneously ignites, and, thereby, also ignites the compressed charge air gaseous fuel mixture within combustion chamber 6. The amount of ignition fuel may be, for example, within the range of 0.5 % to 5 % of the fuel amount injected during LFM.

For both LFM and GFM, after combustion of the air fuel mixture in combustion chamber 6, exhaust gas leaves combustion chamber 6 through opened outlet valve 20 via exhaust port 22 to exhaust gas system 24.

In LFM, the pressure in intake port 16 may change during any up transient and any down transient load change of dual fuel internal combustion engine. Specifically, the pressure of the charge air from charge air system 14 is increased during up transient load changes, and decreased during down transient load changes.

To maintain close the at least one gaseous fuel admission valve 44 in LFM, a pressure is applied upstream of gaseous fuel admission valve 44 that is greater than or equal to the pressure downstream of gaseous fuel admission valve 44. By maintaining close the at least one gaseous fuel admission valve 44 in LFM particle ingress due to passing charge air may be reduced. Furthermore, dithering of the at least one gaseous fuel admission valve 44 may be reduced as the pressure difference may not constantly change during operation in LFM, in particular, changing from a negative pressure difference to a positive pressure difference and vice versa.

In the exemplary embodiments shown in Figs. 1 to 3, the pressure is applied upstream of gaseous fuel admission valve 44 by pressurising gas system 48; 54; 62 supplying pressurised gas through opened gas inlet valve 38; 58; 64 (controlled by control unit 46) via gas intake 42; 60; 66 into gaseous fuel pipe 40.

It is noted that in configurations comprising two or more gaseous fuel admission valves 44, pressurising gas system 48; 54; 62 may maintain close all existing gaseous fuel admission valves 44 as said gaseous fuel admission valves 44 may all be fluidly connected with their upstream side to the pressurising gas system, for example, via gaseous fuel pipe 40.

Specifically, in the embodiment shown in Fig. 1, in LFM, inert gas flushing system 36 supplies pressurised inert gas such as nitrogen. Control unit 46 opens gas inlet valve 38 to enable pressurised inert gas entering gaseous fuel pipe 40 to apply a pressure upstream of gaseous fuel admission valve 44.

It is noted that inert gas flushing system 36 is normally used to flush gaseous fuel pipe 40 when stopping GFM to vent off left gaseous fuel in gaseous fuel pipe 40 through the venting valve of gas valve unit 32.

In some embodiments, when switching from GFM to LFM, the at least one gaseous fuel admission valve 44 may be closed, and inert gas flushing system 36 may vent off gaseous fuel left in gaseous fuel pipe 40 through the opened venting valve of gas valve unit 32 by supplying an inert gas such as nitrogen. If gaseous fuel may be vented off, the venting valve of gas valve unit 32 may be closed, and inert gas flushing system may further supply inert gas to gaseous fuel pipe 40 to apply a pressure upstream of the at least one gaseous fuel admission valve 44 in LFM to maintain close the at least one gaseous fuel admission valve 44.

In the embodiment shown in Fig. 2, in LFM, charge air system 14 may not only supply charge air to intake port 16, but may also supply charge air via gas intake 60 to gaseous fuel pipe 40 to apply a pressure upstream of gaseous fuel admission valve 44. Similarly to the above said, control unit 46 may open gas inlet valve 58 to enable charge air entering gaseous fuel pipe 40 to apply a pressure upstream of gaseous fuel admission valve 44. To enable supplying of charge air into gaseous fuel pipe 40, a new fluid connection connecting charge air system 14 with gas intake 60 may be installed.

In some embodiments, charge air may be filtered by gas filter 56 before being supplied to gaseous fuel pipe 40.

In the embodiment shown in Fig. 3, in LFM, instrument air system 17 may not only supply instrument air during an initial phase of operation of dual fuel internal combustion engine 1, but may also supply instrument air via gas intake 66 to gaseous fuel pipe 40 to apply a pressure upstream of gaseous fuel admission valve 44. Similarly to the above said, control unit 46 may open gas inlet valve 64 to enable instrument air entering gaseous fuel pipe 40 to apply a pressure upstream of gaseous fuel admission valve 44. To enable supplying of instrument air into gaseous fuel pipe 40, a new fluid connection connecting instrument air system 17 with gas intake 66 may be installed.

In some embodiments, control unit 46 may selectively open and close gas inlet valve 38; 58; 64 in LFM to allow a pressurised gas to enter gaseous fuel pipe 40 only if a pressure downstream of gaseous fuel admission valve 44 is greater than upstream of gaseous fuel admission valve 44.

In some embodiments, control unit 46 may continuously adapt operation of gas inlet valve 38; 58; 64, and, thereby, applying a pressure upstream of gaseous fuel admission valve 44 that may continuously follow a pressure profile downstream of gaseous fuel admission valve 44 to maintain a pressure upstream of the at least one gaseous fuel admission valve 44 greater than or equal to a pressure downstream of the gaseous fuel admission valve 44 during operation in LFM.

In some embodiments, a pressure applied upstream of the at least one gaseous fuel admission valve 44 may be, for example, within the range of 100 mbar to 500 mbar greater than a pressure downstream of the gaseous fuel admission valve 44. Thereby, leakage from upstream the closed gaseous fuel admission valve 44 to downstream the closed gaseous fuel admission valve 44 in LFM may be kept small.

It is noted that alternatively to the above described exemplary pressurising gas systems 48; 54; 62 of Figs. 1 to 3 that utilize already existing hardware such as inert gas flushing system 36, charge air system 14, and instrument air system 17; a pressurising gas system may be set up that may not utilize existing hardware of the dual fuel internal combustion engine, but is separately installed. Such a pressurising gas system may comprise, for example, a gas inlet valve, a gas intake, a compressor, a tank, a gas filter, a control unit, and/or sensor means sensing the pressure upstream and downstream of the gaseous fuel admission valve.

In another embodiment, dual fuel internal combustion engine 1 may not comprise any pressurising gas system 48; 54; 62 (as exemplarily shown in Figs. 1 to 3) to apply a pressure upstream of the at least one gaseous fuel admission valve 44. Instead, the pressure upstream of at least one gaseous fuel admission valve 44 may be applied by opening at least one of the at least one gaseous fuel admission valve 44 in LFM by actuation without supplying gaseous fuel, and allowing charge air to pass the at least one opened gaseous fuel admission valve 44. In this embodiment, a control unit may be configured to operate these specific tasks.

Specifically, by opening at least one of the at least one gaseous fuel admission valve 44 by actuation, charge air may be allowed to pass the at least one opened gaseous fuel admission valve 44 from its downstream side to its upstream side, and thereby an equilibrium of the pressure upstream of the at least one gaseous fuel admission valve 44 and the pressure downstream of the at least one gaseous fuel admission valve 44 may be achieved. For example, in the case of an eight cylinder dual fuel internal combustion engine having one gaseous fuel admission valve for each cylinder, one of the eight gaseous fuel admission valves may be opened by actuation in LFM allowing charge air to enter the gaseous fuel pipe (for example, a gaseous fuel manifold). The gaseous fuel pipe may be connected with each of the eight gaseous fuel admission valves. In this configuration, opening of one gaseous fuel admission valve may equalize the pressures upstream and downstream of all gaseous fuel admission valves, and, thereby the seven not actuated gaseous fuel admission valves may be maintained close. Accordingly, dithering and particle ingress may be reduced. Gaseous fuel admission valve 44 to be opened in LFM may be always the same gaseous fuel admission valve 44 or may be changed after a certain time interval.

In some embodiments, a filter may be installed downstream of at least one of gaseous fuel admission valve 44 to filter charge air from particulates before allowing charge air to pass the opened gaseous fuel admission valve. For example, the filter may be installed between gaseous fuel admission valve 44 and intake port 16 within cylinder head 5.

In some embodiments, gaseous fuel pipe 40 may be a double walled pipe, wherein the inner pipe is adapted to guide gaseous fuel. In these embodiments, gas intakes 42; 60; 60 may be positioned at suitable positions to avoid penetrating the double walled pipe. For example, gas intakes 42; 60; 66 may be positioned close to gas valve unit 32, or close to gaseous fuel admission valve 44. For purposes of clarity the embodiments shown in Figs. 1 to 3 do not show double-walled gaseous fuel pipes.

In some embodiments, pressurising gas system 48; 54; 62 may further comprise a gas filter 56 fluidly connected to the gas inlet valve for filtering the supplied gas.

In another aspect a method for operating dual fuel internal combustion engine 1 configured to operate in LFM and GFM using at least one gaseous fuel admission valve 44 for dosing gaseous fuel into charge air may comprise, operating dual fuel internal combustion engine 1 in LFM, and simultaneously applying a pressure upstream of at least one gaseous fuel admission valve 44 greater than or equal to a pressure downstream of at least one gaseous fuel admission valve 44.

The method may further comprise, monitoring the pressure upstream of at least one gaseous fuel admission valve 44, and monitoring the pressure downstream of the at least one gaseous fuel admission valve 44. Monitoring the pressure upstream of at least one gaseous fuel admission valve 44 may be performed by first sensor 50, and monitoring the pressure downstream of at least one gaseous fuel admission valve 44 may be performed by second sensor 52.

The method step of applying a pressure upstream of at least one gaseous fuel admission valve 44 may comprise, maintaining at least one gaseous fuel admission valve 44 in a closed position, and supplying a pressurised gas such as charge air, instrument air, nitrogen, or gaseous fuel upstream of at least one gaseous fuel admission valve 44. Charge air may be supplied by charge air system 14; instrument air may be supplied by instrument air system 17; nitrogen may be supplied by inert gas flushing system 36; and gaseous fuel may be supplied by gaseous fuel system 30.

The method may further comprise, filtering the pressurised gas before providing the pressurised gas upstream of at least one gaseous fuel admission valve 44. Filtering may be performed by, for example, gas filter 56.

The method step of applying a pressure upstream of at least one gaseous fuel admission valve 44 may alternatively comprise, opening at least one of the least one gaseous fuel admission valve 44 without supplying gaseous fuel, and allowing charge air to pass the at least one opened gaseous fuel admission valve 44. Thereby, a pressure upstream of at least one gaseous fuel admission valve 44 is applied that is equal to a pressure downstream of at least one gaseous fuel admission valve 44.

The method may further comprise, filtering charge air before allowing charge air to pass the at least one opened gaseous fuel admission valve 44. Filtering may be performed by a filter that may be arranged downstream of the at least gaseous fuel admission valve 44, for example, downstream of the at least one opened gaseous fuel admission valve 44. The filter may separate particulates from the charge air.

Control unit 46 may be configured to perform the above described method steps, for example, based on pressure values measured by first sensor 50 and second sensor 52. Control unit 46 may be a single microprocessor or plural microprocessors that may include means for controlling, among others, an operation of the various components of dual fuel internal combustion engine 1, for example, inlet valve 18, starter valve 19, outlet valve 20, gas valve unit 32, and gaseous fuel admission valve 44. Control unit 46 may be a general engine control unit (ECU) capable of controlling numeral functions associated with dual fuel internal combustion engine 1 and/or its associated components. Control unit 46 may include all the components required to run an application such as, for example, a memory, a secondary storage device, and a processor such as a central processing unit or any other means known in the art for controlling dual fuel internal combustion engine 1 and its various components.

Various other known circuits may be associated with control unit 46, including power supply circuitry, signal-conditioning circuitry, communication circuitry, and other appropriate circuitry. Control unit 46 may analyze and compare received and stored data, and, based on instructions and data stored in memory or input by a user, determine whether action is required. For example, control unit 46 may compare received values with target values stored in memory, and based on the results of the comparison, control unit 46 may transmit signals to one or more components to alter the operation status thereof.

Control unit 46 may include any memory device known in the art for storing data relating to operation of dual fuel internal combustion engine 1 and its components. The data may be stored in the form of one or more maps that describe and/or relate, for example, valve opening timing. Each of the maps may be in the form of tables, graphs, and/or equations, and include a compilation of data collected from lab and/or field operation of the dual fuel internal combustion engine 1. The maps may be generated by performing instrumented tests on the operation of the dual fuel internal combustion engine 1 under various operating conditions while varying parameters associated therewith. Control unit 46 may reference these maps and control operation of one component in response to the desired operation of another component.

It is noted that herein, the terminology "upstream" and "downstream" of (at least one) gaseous fuel admission valve refers to a flow direction of gaseous fuel in GFM. Specifically, gaseous fuel may flow from gaseous fuel pipe 40 through gaseous fuel admission valve 44 into intake port 16.

Herein, the term "dual fuel internal combustion engine" may refer to internal combustion engines which may be used as main or auxiliary engines of stationary power providing systems such as power plants for production of heat and/or electricity as well as in ships/vessels such as cruiser liners, cargo ships, container ships, tankers, and other vehicles. Fuels for internal combustion engines may include diesel oil, marine diesel oil, heavy fuel oil, alternative fuels or a mixture thereof, and natural gas.

Although the preferred embodiments of this invention have been described herein, improvements and modifications may be incorporated without departing from the scope of the following claims.

## Claims

1. A method for operating a dual fuel internal combustion engine (1) configured to operate in a liquid fuel mode and in a gaseous fuel mode using at least one gaseous fuel admission valve (44) for dosing gaseous fuel into charge air, comprising:
operating the dual fuel internal combustion engine (1) in the liquid fuel mode; and
simultaneously applying a pressure upstream of the at least one gaseous fuel admission valve (44) greater than or equal to a pressure downstream of the at least one gaseous fuel admission valve (44).

2. The method of claim 1, further comprising:
monitoring the pressure upstream of the at least one gaseous fuel admission valve (44); and
monitoring the pressure downstream of the at least one gaseous fuel admission valve (44).

3. The method of claim 1 or 2, wherein the method step of applying a pressure upstream of the at least one gaseous fuel admission valve (44) comprises:
maintaining the at least one gaseous fuel admission valve (44) in a closed position, and
supplying pressurised gas upstream of the at least one gaseous fuel admission valve (44).

4. The method of claim 3, wherein pressurised gas is supplied until the pressure upstream of the at least one gaseous fuel admission valve (44) is greater than or equal to the pressure downstream of the at least one gaseous fuel admission valve (44).

5. The method of claim 3 or 4, further comprising:
filtering the pressurised gas before supplying the pressurised gas upstream of the at least one gaseous fuel admission valve (44).

6. The method of any one of claims 3 to 5, wherein the method step of supplying pressurised gas upstream of the at least one gaseous fuel admission valve comprises fluidly connecting an instrument air system (17), a charge air system (14), an inert gas flushing system (36), or a gaseous fuel system (30).

7. The method of claim 1 or 2, wherein the method step of applying a pressure upstream of the at least one gaseous fuel admission valve (44) comprises:
opening at least one of the least one gaseous fuel admission valve (44) without supplying gaseous fuel, and
allowing charge air to pass the at least one opened gaseous fuel admission valve (44).

8. The method of claim 7, further comprising:
filtering charge air before allowing charge air to pass the at least one opened gaseous fuel admission valve (44).

9. A pressurising gas system (48; 54; 62) configured to be used at a dual fuel internal combustion engine (1) configured to operate in a liquid fuel mode and in a gaseous fuel mode using at least one gaseous fuel admission valve (44) for dosing gaseous fuel from a gaseous fuel system (30) into charge air, the pressurising gas system (48; 54; 62) comprising:
a gaseous fuel pipe (40) configured to fluidly interconnect the gaseous fuel system (30) with the at least one gaseous fuel admission valve (44); the gaseous fuel pipe (40) comprising a gas intake (42; 60; 66), the gas intake (42; 60; 66) being configured to receive pressurised gas,
a gas inlet valve (38; 58; 64) fluidly connected to the gaseous fuel pipe (40) via the gas intake (42; 60; 66);
a control unit (46) connected to the gas inlet valve (38; 58; 64), the control unit (46) being configured to open the gas inlet valve (38; 58; 64) in liquid fuel mode to enable pressurised gas entering the gaseous fuel pipe (40) to apply a pressure upstream of the at least one gaseous fuel admission valve (44) greater than or equal to a pressure downstream of the at least one gaseous fuel admission valve (44).

10. The pressurising gas system (48; 54; 62) of claim 9, wherein the control unit (46) is further configured to selectively open the gas inlet valve (38; 58; 64) in liquid fuel mode if the pressure downstream of the at least one gaseous fuel admission valve (44) is greater than the pressure upstream of the gaseous fuel admission valve (44).

11. The pressurising gas system (48; 54; 62) of claim 9 or 10, further comprising:
a first sensor (50) connected to the control unit (46), and being configured to sense the pressure upstream of the at least one gaseous fuel admission valve (44); and
a second sensor (52) connected to the control unit (46), and being configured to sense the pressure downstream of the at least one gaseous fuel admission valve (44).

12. The pressurising gas system (48; 54; 62) of any one of claims 9 to 11, further comprising:
a gas filter (56) fluidly connected to the gas inlet valve (38; 58; 64).

13. The pressurising gas system (54) of any one of claims 9 to 12, wherein the gas intake (60) is configured to be fluidly connected to a charge air system (14) of the dual fuel internal combustion engine (1).

14. The pressurising gas system (62) of any one of claims 9 to 12, wherein the gas intake (66) is configured to be fluidly connected to an instrument air system (17) of the dual fuel internal combustion engine (1).

15. The pressurising gas system (48) of any one of claims 9 to 12, wherein the gas intake (42) is configured to be fluidly connected to an inert gas flushing system (36) of the dual fuel internal combustion engine (1).
